# EUROPEAN PATENT SPECIFICATION

(11) **EP 1 181 869 B1**
(45) Date of publication and mention of the grant of the patent: **26.10.2005**
(21) Application number: 00307228.7
(22) Date of filing: 22.08.2000
(51) Int. Cl.: A23J 1/14

(54) **Method for producing a purified vegetable protein material having low concentration of ribonucleic acids**
Verfahren zur Herstellung eines hochgereinigten pflanzlichen Proteins mit niedriger Ribonukleinsäure- Konzentration
Procédé de préparation d'un matériau protéique végétal purifié à teneur réduite en acides ribonucléiques

(43) Date of publication of application: 27.02.2002
(73) Proprietor: SOLAE, LLC, St. Louis, MO 63102 (US)
(72) Inventor: Wong, Theodore M., Manchester, Missouri 63201 (US); Singer, David A., St Louis, Missouri 63112 (US); Lin, Santa Hui-Cheng, Town & Country, Missouri 63017 (US)
(74) Representative: Tubby, David George

(56) References cited:
- EP-A- 0 380 343
- EP-A- 0 619 369
- US-A- 3 733 207

## Description

This invention relates to a method of producing purified vegetable protein materials, and more particularly, to a method of producing ultrapure vegetable protein isolates and concentrates.

Many food and beverage products include protein supplements derived from vegetable materials such as soybeans, beans, peas, other legumes, and oilseeds such as rapeseed. Vegetable protein materials, particularly soy, are used to fortify infant formulas. The purpose of the vegetable protein supplement in an infant formula is to increase the nutritional value of the formula, and to provide a protein content approximating to the protein content of human milk.

Commercially available protein concentrates and isolates, however, contain some impurities which are undesirable in products such as infant formulas. Specific impurities which are undesirable in vegetable protein isolates and concentrates include phytic acid, phytates, ribonucleic acids, ash, and minerals bound to phytic acid, phytates, or ribonucleic acids which are unavailable for human assimilation such as phosphorus, calcium, chloride, iron, zinc, and copper. It is desirable to provide methods for reducing the levels of these impurities in vegetable protein isolates and concentrates, particularly for use in products such as infant formulas.

Reducing the level of phytic acid, also known as inositol hexaphosphoric acid, and phytates, which are the salts of phytic acid, in vegetable protein materials has been of interest since phytic acid and phytates tend to form complexes with proteins and multivalent metal cations, reducing the nutritional value of the vegetable protein material. Significant efforts have been made to reduce the concentration of phytic acid and phytates in vegetable protein materials. For example, US Patent No. 5,248,765 provides a method of separating phytate and manganese from protein and dietary fibre by treating an aqueous slurry of the phytate-containing material with alumina at low pH. The alumina, together with phytate attached to the alumina, is then separated from the protein and fibre material. US Patent No. 2,732,395, US Patent No. 4,072,670, US Patent No. 4,088,795, US Patent No. 4,09,120 and UK Patent No. 1,574,110 all teach various methods of removing phytic acid and phytates from protein materials by various precipitation and differential solubility separation techniques.

Other methods of reducing phytic acid or phytate concentrations in vegetable protein materials utilise enzymes to degrade phytic acid or phytates. European Patent Application No. 0 380 343 A2 provides a method of preparing phytate-free or low phytate soy protein isolates and concentrates in which a phytic acid and a phytate degrading enzyme (hereinafter a "phytase") is added to a soy protein isolate or concentrate at a temperature of 20°C to 60°C and at a pH of 2-6 to degrade phytic acid and phytates in the protein material. US Patent No. 4,642,236, US Patent No. 3,733,207, and Japanese Kokai Patent Application No. Hei 8[1996]-214787 all provide processes in which phytases are used to degrade phytic acid and phytates in soy protein. Phytase enzyme preparations are particularly useful for purifying vegetable protein materials since they are inexpensive and readily commercially available.

Phytase enzymes are phosphoric monoester hydrolases (I.U.B. 3.1.3) and are usually derived from microbial or fungal sources such as the *Aspergillus* and *Rhizopus* species. Commonly used phytase enzyme compositions typically include the enzyme 3-phytase [myo-inositol-hexakisphosphate 3-phosphohydrolase (I.U.B. 3.1.3.8)] as a primary phytase enzyme. Some, but not all, phytase enzyme compositions include sufficient concentrations of the enzyme acid phosphatase [orthophosphoric monoester phosphohydrolase (I.U.B. 3.1.3.2)] to effect degradation of phytic acid and phytates.

Phytase enzyme compositions are not recognised to reduce the levels of ribonucleic acid materials and associated minerals in vegetable protein materials since the most common phytases, especially 3-phytase, do not degrade the ribonucleic acid structure. Furthermore, phosphatase enzymes are also not known for reduction in levels of ribonucleic acid materials and associated minerals. For instance, EP-A-0619369 (Avere) discloses the use of phosphatase enzymes, including IUB 3.1.3.2, but no mention is made of the its use in the breakdown of ribonucleic acids. Ribonuclease enzyme compositions are known to cleave and degrade ribonucleic acids, and can be used to reduce levels of ribonucleic acids in vegetable proteins, however, such enzyme compositions are quite expensive and are impractical for use on a scale necessary for commercial production of purified vegetable protein materials.

It is desirable to reduce the levels of ribonucleic acid materials and associated minerals in vegetable proteins at costs which make the methods practical for use on a commercial scale.

In one aspect, the invention is a method for reducing the concentrations of ribonucleic acids and minerals bound to ribonucleic acids from a vegetable protein material. A vegetable protein material is slurried in an aqueous solution. The slurry is treated with an enzyme preparation as claimed at a pH and a temperature and for a time effective to substantially reduce the ribonucleic acid concentrations in the vegetable protein material. The treated slurry is then washed to provide a vegetable protein material having a reduced concentration of ribonucleic acids.

In other preferred embodiments of the invention, the vegetable protein material is a soy protein, the pH at which the slurry is treated with the enzyme preparation is from about 3 to about 6, the temperature at which the slurry is treated with the enzyme preparation is from about 20°C to about 70°C, and the time period over which the slurry is treated with the enzyme preparation is from about 30 minutes to about 4 hours. Each of these preferred embodiments may be employed alone or in any combination. The treated slurry is washed after being treated with the enzyme preparation.

In yet another preferred embodiment, the slurry is heat treated after being enzymatically treated and washed, and the heat treated slurry is dried.

In another aspect, the invention is a method for reducing the concentrations of phytic acid, phytates, ribonucleic acids, and minerals bound to phytic acid, phytates, and ribonucleic acids from a vegetable protein material. A vegetable protein material is provided and is slurried in an aqueous solution. The slurry is treated with an enzyme preparation as claimed at a pH and a temperature and for a time effective to substantially reduce the phytic acid, phytate, ribonucleic acid and mineral concentrations in the vegetable protein material.

The present invention resides in the discovery that acid phosphatase enzymes unexpectedly cleave ribonucleic acids, and therefore can be used to degrade and reduce the concentration of ribonucleic acid materials in vegetable protein materials on a commercial scale, as well as remove minerals and ash bound by the ribonucleic acid materials. Although certain commercially available phytase enzyme preparations include acid phosphatases, it has not been previously recognised that acid phosphatases are useful for degrading ribonucleic acids, and that the concentration of ribonucleic acids in vegetable protein materials can be reduced by treatment with an acid phosphatase. Acid phosphatase is capable of degrading phytic acid and phytates as well as ribonucleic acids, therefore, an acid phosphatase can be used to degrade and reduce the concentrations of phytic acid and phytates as well as ribonucleic acids, or can be used in combination with other phytases.

The starting material for the process of the present invention is a vegetable protein concentrate or a vegetable protein isolate. As used herein, and according to conventional definition, a vegetable protein concentrate is a vegetable protein material containing 65%-90% protein on a dry basis, and a vegetable protein isolate is a vegetable protein material containing at least 90% protein on a dry basis. Vegetable protein concentrates and isolates are readily commercially available. For example, soy protein isolates which may be used in the process of the present invention are available from Protein Technologies International, Inc., St. Louis, Missouri, and are sold under the trade names SUPRO® 500E and SUPRO® 620.

Vegetable protein concentrates and vegetable protein isolates may be prepared according to conventional methods. Vegetable protein concentrates are commonly prepared by (i) leaching a vegetable protein material with an aqueous solution having a pH at about the pH of the isoelectric point of the protein; (ii) extracting a vegetable protein material with an aqueous alcohol; or (iii) denaturing a vegetable protein material with moist heat, followed by extraction of the denatured vegetable protein material with water.

In a preferred embodiment, a soy protein concentrate is prepared for use in the method of the present invention. Commercially available defatted soy flakes (dehulled and defatted soybeans) are washed with an aqueous solution having a pH at about the isoelectric point of soy protein, preferably at a pH of about 4 to about 5, and most preferably at a pH of about 4.4 to about 4.6. The aqueous acidic solution leaches water soluble carbohydrates, minerals, phenolics, and other non-proteinaceous materials away from the soy protein, which is insoluble in the aqueous solution at its isoelectric point, leaving the soy protein concentrate.

Vegetable protein isolates are formed by extracting a vegetable protein material with an aqueous alkaline solution to solubilise protein material. The solubilised protein material extract is then separated from insoluble vegetable matter such as cellulose and other vegetable fibres. The pH of the protein extract is then adjusted to about the isoelectric point of the protein to precipitate the protein. The precipitated protein is separated from the solution by filtration or centrifugation to separate the protein material from water soluble carbohydrates, minerals, phenolics, and other non-proteinaceous materials which remain in the solution. The separated protein is then washed with water to form the protein isolate.

In a most preferred embodiment, a soy protein isolate is prepared for use in the method of the present invention. Commercially available defatted soy flakes are utilised as the starting material. Preferably the soy flakes have been treated with a sulphite, such as sodium sulphite, for improved flow characteristics and improved microbial control. The soy flakes are extracted with an aqueous alkaline solution, preferably an aqueous sodium hydroxide solution, having a pH from about 8 to about 11. Preferably the weight ratio of the extractant to the soy flake material is from about 5:1 to about 16:1. The extract is separated from the insoluble materials, such as soy fibre and cellulose, by filtration or by centrifugation and decantation of the supernatant extract from the insoluble materials. The pH of the separated extract is adjusted to about the isoelectric point of soy protein, preferably from about pH 4 to about pH 5, most preferably from about pH 4.4 to about pH 4.6, with a suitable acid, preferably hydrochloric acid, sulphuric acid, nitric acid, or acetic acid, to precipitate a soy protein material. The precipitated protein material is separated from the extract, preferably by centrifugation or filtration. The separated protein material is washed with water, preferably at a weight ratio of water to protein material of about 5:1 to about 12:1 to produce the soy protein isolate.

An aqueous slurry of the vegetable protein concentrate or vegetable protein isolate (hereinafter, generally, the "protein material") is formed by mixing the protein material with water to form a slurry. Preferably the slurry should contain from about 2% to about 30% of the protein material by weight, and more preferably should contain from about 5% to about 20% of the protein material by weight, and most preferably should contain from about 10% to about 18% of the protein material by weight.

The slurry is then treated with an enzyme preparation as claimed to substantially reduce the concentration of ribonucleic acids in the protein material. The enzyme preparation containing an acid phosphatase may be derived from a microbial or fungal source such as the *Aspergillus* and *Rhizopus* species. A preferred source of the acid phosphatase useful in the method of the present invention is the *Aspergillus niger* fungus. Phytase enzyme preparations derived from *Aspergillus niger* and which contain acid phosphatase are commercially available.

The enzyme preparation is added to the slurry in sufficient amount to provide an acid phosphatase concentration effective to degrade and substantially reduce the concentration of ribonucleic acids present in the protein material. Preferably at least a majority of the ribonucleic acids present in the initial vegetable protein material are degraded by the acid phosphatase enzyme, where the term a majority is defined to be 50% or greater. More preferably, the acid phosphatase degrades at least 60% of the ribonucleic acids in the vegetable protein material, even more preferably at least 70% of the ribonucleic acids in the protein material, and even more preferably at least 80% of the ribonucleic acids in the protein material, and most preferably the acid phosphatase degrades substantially all of the ribonucleic acids in the protein material.

In order to effectively degrade and reduce the concentration of the ribonucleic acids in the protein material, the enzyme preparation should include a sufficient amount of acid phosphatase, or a combination of acid phosphatase and another phytase such as 3-phytase[myo-inositol-hexakisphosphate 3-phosphohydrolase (I.U.B. 3.1.3.8)], to degrade and substantially reduce the concentration of the ribonucleic acids. Preferably the enzyme preparation is added so that the acid phosphatase is present in the slurry from about 0.1% to about 10% of the protein material by dry weight, more preferably from about 0.3% to about 5% of the protein material by dry weight, and most preferably from about 0.5% to about 3% of the protein material by dry weight.

In the most preferred embodiment of the invention the enzyme preparation degrades and reduces the concentration of phytic acid and phytates as well as ribonucleic acids. Preferably the enzyme preparation degrades at least a majority of the phytic acid and phytates, where a majority is defined as 50%, more preferably at least 75% of the phytic acid and phytates are degraded, even more preferably at least 85% of the phytic acid and phytates are degraded, and most preferably substantially all of the phytic acid and phytates are degraded by the enzyme preparation.

In order to effectively degrade and reduce the concentration of the ribonucleic acids, phytic acid, and phytates in the protein material, the enzyme preparation should include a sufficient amount of acid phosphatase, or a combination of acid phosphatase and another phytase such as 3-phytase[myo-inositol-hexakisphosphate 3-phosphohydrolase (I.U.B. 3.1.3.8)] to degrade the ribonucleic acids, phytic acid, and phytates. In a most preferred embodiment, the enzyme preparation is added so that the acid phosphatase and 3-phytase are present in the slurry from about 0.1% to about 10% of the protein material by dry weight, more preferably from about 0.3% to about 5% of the protein material by dry weight, and most preferably from about 0.5% to about 3% of the protein material by dry weight.

The activity of the enzyme preparation should be effective to degrade and substantially reduce the concentration of ribonucleic acids, the phytic acid concentration, and the concentration of phytates. The enzyme preparation preferably has an activity from about 400 to about 1400 kilo phytase units per kilogram of protein solids (KPU/kg protein solid), more preferably has an activity of about 600 to about 1200 KPU/kg protein solid, and most preferably has an activity of about 1000 KPU/kg protein solid. A kilo phytase unit (KPU) equals 1000 phytase units, where a phytase unit equals the quantity of enzyme which liberates one nanomole of inorganic phosphates from sodium phytate in one minute under standard conditions (40°C, pH 5.5, and 15 minutes incubation). The activity of the enzyme preparation includes acid phosphatase activity and the activity of any other phytase enzyme included in the enzyme preparation.

The pH of the slurry treated with the enzyme preparation should be a pH at which the enzyme preparation is effective to degrade ribonucleic acids, and preferably, a pH at which the enzyme preparation also degrades phytic acid and phytates. It has been discovered that acid phosphatase enzymes very effectively degrade ribonucleic acids in vegetable protein materials at a pH of about 4.5, and it is known in the art that phytase enzymes very effectively degrade phytic acid and phytates at a pH of about 5.3. In a preferred embodiment, the pH of the slurry treated with the enzyme preparation is from about 3 to about 6, more preferably from about 3.5 to about 5.5, and even more preferably from about 4 to about 5, and most preferably from about 4.4 to about 4.6. The pH of the slurry may be adjusted with a suitable acidic reagent, such as hydrochloric acid, sulphuric acid, nitric acid, or acetic acid, or a suitable basic reagent, such as sodium hydroxide, calcium hydroxide or ammonium hydroxide, as necessary to obtain the desired pH.

The temperature of the slurry treated with the enzyme preparation should be a temperature at which the enzymes in the enzyme preparation are effective to degrade ribonucleic acids, and preferably also degrade phytic acid and phytates. Preferably the temperature of the slurry should be high enough to maximise the enzymatic degradation of the ribonucleic acids, phytic acid, and phytates, but not high enough to inactivate the enzyme(s) or to degrade the protein material in the slurry. In a preferred embodiment, the temperature at which the slurry is treated with the enzyme preparation containing acid phosphatase is from about 20°C to about 70°C, more preferably from about 30°C to about 60°C, and most preferably from about 40°C to about 55°C.

The time period which the slurry is treated with the enzyme preparation should be sufficient to enable the enzyme(s) to effectively degrade and reduce the concentration of ribonucleic acids, and preferably also degrade and reduce the concentrations of the phytic acid and phytates in the vegetable protein material. Preferably the slurry is treated with the enzyme preparation at an effective pH and temperature from about 30 minutes to about 4 hours, more preferably from about 45 minutes to about 3 hours, and most preferably from about 1 hour to about 2 hours.

Following treatment of the vegetable protein material slurry with the enzyme preparation, the vegetable protein material is washed to remove the degraded materials, ash, and minerals. Preferably the vegetable protein material is washed by diluting the vegetable protein material slurry with water and centrifuging the diluted slurry. More preferably the vegetable protein material is washed twice, for example, by diluting the vegetable protein material slurry with water, centrifuging the diluted slurry in a disc centrifuge, and then centrifuging the slurry in a bowl centrifuge.

Most preferably, the pH of the slurry in the wash step is about the isoelectric point of the vegetable protein material after degradation of the ribonucleic acids, phytic acid, and phytates to minimise loss of protein material in the wash. Degradation of the ribonucleic acids, phytic acid, and phytates may cause the isoelectric point of the protein material to shift. For example, soy protein including ribonucleic acids, phytic acid, and phytates has an isoelectric point of about pH 4.5, but has an isoelectric point of about pH 5.1 after enzymatic degradation of these materials. The pH of the slurry may be adjusted to about the isoelectric point of the protein material, if necessary, with a suitable acidic or basic reagent prior to washing the protein material.

The wash should be conducted with sufficient amounts of wash water, preferably pH adjusted to about the isoelectric point of the protein, to remove the degraded ribonucleic acids, and preferably, the degraded phytic acid and phytates, from the vegetable protein material. In a preferred embodiment, at least a majority of the degraded ribonucleic acids, phytic acid, and phytates present in the initial vegetable protein material are removed by the process of the present invention, where the term "majority" is defined as 50% or greater. More preferably, the process of the present invention is effective to remove at least 60% of the degraded ribonucleic acids, phytic acid, and phytates present in the vegetable protein material, even more preferably at least 70% of the degraded ribonucleic acids, phytic acid, and phytates present in the vegetable protein material, and even more preferably at least 80% of the degraded ribonucleic acids, phytic acid, and phytates present in the vegetable protein material, and most preferably substantially all of the degraded ribonucleic acids, phytic acid, and phytates present in the vegetable protein material are removed.

After washing, a purified vegetable protein material may be recovered from the slurry by drying the protein material. In a preferred embodiment, the purified vegetable protein material is recovered by spray drying the protein material in accordance with conventional spray drying techniques.

The vegetable protein material having reduced levels of ribonucleic acids, and preferably, reduced levels of phytic acid and phytates, may be processed further, if desired, to provide a purified protein material with modified functional characteristics. The slurry of purified protein material may be heat treated to denature the protein and to sterilise the protein material. Preferably the slurry is heat treated by jet cooking in accordance with conventional jet cooking techniques, and is flash cooled by ejection from a jet cooker into a vacuumised chamber. Most preferably, the slurry of purified protein material is heat treated under pressure at a temperature of about 140°C to about 160°C for a period of about 1 to 15 seconds. In a most preferred embodiment, the pH of the protein slurry is neutralised to a pH of about 6 to about 8 with a suitable basic reagent, preferably an aqueous sodium hydroxide/potassium hydroxide solution, prior to heat treating the slurry to aid in processing the heated treated protein material.

The purified protein material, either heat treated or untreated, is subjected to enzymatic hydrolysis to reduce the viscosity of the protein material. Enzymatic hydrolysis is particularly desirable after heat treatment of the protein material since the denatured protein material is more viscous than similar protein material which has not been subjected to a heat treatment. A slurry of the purified protein material is treated with a conventional, commercially available protease enzyme at a pH, a temperature, an enzyme concentration and activity, and for a time effective to hydrolyse the protein material.

The pH at which the enzymatic hydrolysis is effected is dependent on the particular protease enzyme used. A protease enzyme should be selected to effect the hydrolysis which has a known pH range at which the enzyme is effective to hydrolyse protein, and the hydrolysis of the purified protein material should be conducted within the known effective pH range of the enzyme. In a preferred embodiment, the protease enzyme Bromelain is utilised at a pH of from about 4 to about 9.

The concentration and activity of the protease should be sufficient to effect the desired degree of hydrolysis of the protein. Preferably the protease is added to a slurry of the purified protein material so that the protease is present in about 0.1% to about 10% of the protein material by dry weight, and more preferably in about 0.5% to about 5% of the protein material by dry weight. Further, preferably, the protease should have an activity of from about 1000 to 4000 Tyrosine Units per gram ("TU/g"), and more preferably should have an activity of about 2000 to about 3000 TU/g, where 1 TU/g equals the enzyme activity which liberates one micromole of tyrosine per minute at 30°C after 15 minutes of incubation at the protease's optimum pH for effecting hydrolysis of a protein material.

The temperature of the slurry treated with the protease should be a temperature at which the protease is effective to hydrolyse the purified protein material. Preferably the temperature of the slurry should be high enough to maximise the enzymatic hydrolysis of the protein material, but not high enough to inactivate the enzyme. In a preferred embodiment, the temperature at which the slurry is treated with the protease is from about 15°C to about 75°C, more preferably from about 30°C to about 65°C, and most preferably from about 40°C to about 55°C.

The time period which the slurry is treated with the protease should be sufficient to enable the enzyme to hydrolyse the protein material to the desired degree of hydrolysis. Preferably the slurry is treated with the protease at an effective pH and temperature from about 15 minutes to about 2 hours, more preferably from about 30 minutes to about 1.5 hours, and most preferably from about 45 minutes to about 1 hour. After the enzyme hydrolysis is complete, the reaction is quenched by heating the slurry to a temperature above the inactivation temperature of the protease, for example, by heating the slurry to a temperature above 75°C.

The hydrolysed purified vegetable protein material may be heat treated, if desired to sterilise the protein material and to denature the hydrolysed protein material, if the protein material has not previously been heat treated. Preferably the slurry is heat treated by jet cooking in accordance with conventional jet cooking techniques, and is flash cooled by ejection from a jet cooker into a vacuumised chamber. Most preferably, the slurry of hydrolysed purified protein material is heat treated under pressure at a temperature of about 140°C to about 160°C for a period of about 1 to 15 seconds.

After enzymatic hydrolysis, and, optionally, heat treatment, the hydrolysed purified protein material may be recovered from the slurry by drying the protein material. In a preferred embodiment, the hydrolysed purified vegetable protein material is recovered by spray drying the protein material in accordance with conventional spray drying techniques.

### EXAMPLE 1 (comparative)

A purified vegetable protein isolate is formed in accordance with the process of the present invention. 110.45 kg (Two hundred forty-three pounds) of a soy protein isolate is added to 1163.18 kg (two thousand nine hundred and fifty-nine pounds) of water to form a soy protein isolate slurry containing 7.6% solids. The pH of the slurry is adjusted to 4.5 with hydrochloric acid, and the temperature of the slurry is raised to 50°C. An enzyme preparation containing an acid phosphatase and a phytase and having an activity of 1000 KPU/kg of curd solids is added to the slurry. The slurry is treated with the enzyme preparation for two hours, after which the pH of the slurry is adjusted to 5.1 with a caustic blend of potassium hydroxide and sodium hydroxide. The slurry is then diluted with water to a concentration of 4.2% solids, and is washed in a bowl centrifuge. 125 kg (Two hundred and seventy-five pounds) of the washed slurry are neutralised with a caustic blend of potassium hydroxide and sodium hydroxide. The neutralised material is heat treated by jet cooking at 150°C and flash cooled to 53°C by ejection into a vacuumised chamber having a pressure of about 26 torr. The heat treated slurry is then spray dried to recover 7.05 kg (15.5 pounds) of purified soy protein isolate.

### EXAMPLE 2

A hydrolysed purified vegetable protein isolate is formed in accordance with the process of the present invention. 461.36 kg (One thousand fifteen pounds) of a purified soy protein isolate slurry containing 15.5% solids [approximately 71.36 kg (157 pounds) of purified soy protein material] is adjusted to pH 7.4 with 1400 millilitres of a sodium hydroxide/potassium hydroxide blend. The slurry is jet cooked to a temperature of 150°C for 9 seconds and is flash cooled by ejection into a vacuumised chamber. 329.55 kg (Seven hundred twenty-five pounds) of the slurry is treated with the protease enzyme Bromelain, the enzyme having an activity of 2500 TU/g and being added to the slurry to a concentration of 0.29% of the protein material in the slurry by dry weight. The temperature of the enzyme treated slurry is maintained at about 50°C for the duration of the enzymatic treatment, which is 40 minutes. After the enzyme treatment the slurry is cooled to 16°C and an additional 190 millilitres of the sodium hydroxide/potassium hydroxide blend is added to the slurry. The slurry is then jet cooked at 150°C for 9 seconds and is flash cooled by ejection into a vacuumised chamber. The slurry is then spray dried to recover 34.09 kg (75 pounds) of a hydrolysed purified soy protein isolate.

### EXAMPLE 3 (comparative)

The effect that enzyme activity has on ribonucleic acid concentration and phytic acid concentration in a soy protein isolate is examined, where the soy protein isolate is purified in a process performed in accordance with the present invention. A soy protein isolate slurry is formed by combining soy protein isolate and water adjusted to pH 4.5 with hydrochloric acid, where the total solids in the slurry are present in about 8.5% of the slurry by weight. The slurry is heated to a temperature of 50°C.

Two samples of the slurry are prepared from the protein isolate slurry for enzymatic degradation of ribonucleic acids and phytic acid, the first sample weighing 695.45 kg (1530 pounds) and containing 8.66% total solids by weight, and the second sample weighing 686.36 kg (1510 pounds) and containing 8.66% total solids by weight. Enzyme preparations containing an acid phosphatase and a phytase enzyme are added to each slurry sample. An enzyme preparation having an activity of 800 KPU/kg of curd solids is added to the first sample. An enzyme preparation having an activity of 1400 KPU/kg of curd solids is added to the second sample. The samples are reacted with the enzyme preparations for 1 hour. Following the enzyme treatment of the samples, the samples are thoroughly washed and the enzymes are thermally deactivated by jet cooking at a temperature of 150°C. The samples are flash cooled to 50°C by ejection into a vacuumised chamber. The cooled samples are then spray dried.

A control sample having a total solids content of 7.6% is provided from the initial protein slurry for comparison purposes. The control sample is heated to 50°C for 1 hour, and then is thoroughly washed. The washed control sample is jet cooked at 150°C and then is flash cooled in a vacuumised chamber to 52°C. The control sample is then spray dried.

The samples are analysed to determine the ribonucleic acid content and the phytic acid content of the samples. The results of the analysis are shown in Table 1 below.

**TABLE 1**

| **KPU/kg curd solid** | **Phytic acid (%)** | **Ribonucleic acid** **(mg/kg)** | **% reduction of ribonucleic acid** |
|---|---|---|---|
| 0 (control) | 1.4 | 9143 | -- |
| 800 | 0.43 | 1784 | 80.5 |
| 1400 | 0.18 | 1769 | 80.7 |

The results clearly show that the enzyme preparations containing an acid phosphatase and a phytase and having an activity of 800 and 1400 KPU/kg of curd solids are effective to substantially reduce the ribonucleic acid content of a soy protein isolate. The results also show that the enzyme preparations are quite effective in reducing the phytic acid content of the protein isolate.

### EXAMPLE 4 (comparative)

The effect of pH on the enzymatic degradation of ribonucleic acids and phytic acid by an enzyme preparation containing an acid phosphatase and a phytase enzyme in a soy protein isolate is examined, where the soy protein isolate is purified in accordance with the present invention. A slurry is formed of soy protein isolate by mixing sufficient soy protein isolate with water adjusted to pH 4.5 by hydrochloric acid to form a slurry containing about 8% of the soy protein isolate by weight. The slurry is heated to a temperature of 50°C.

Two samples of the slurry containing 8% total solids by weight are prepared from the protein isolate slurry for enzymatic degradation of the ribonucleic acids and phytic acid. The first sample is adjusted to a pH of 5.1 with a potassium hydroxide/sodium hydroxide blend. The second sample is left at a pH of 4.5. These samples are then treated for two hours with an enzyme preparation containing an acid phosphatase enzyme and a phytase enzyme and having an activity of 1400 KPU/kg of curd solids. Following the enzyme treatment of the samples, the samples are thoroughly washed and the enzymes are thermally deactivated by jet cooking at a temperature of 150°C. The samples are flash cooled to 50°C by ejection into a vacuumised chamber. The cooled samples are then spray dried.

A control sample having a total solids content of 7.6% is provided from the initial protein slurry for comparison purposes. The control sample is heated to 50°C for 1 hour, and then is thoroughly washed. The washed control sample is jet cooked at 150°C and then is flash cooled in a vacuumised chamber to 52°C. The control sample is then spray dried.

The samples are analysed to determine the ribonucleic acid content and the phytic acid content of the samples. The results of the analysis are shown in Table 2 below.

**TABLE 2**

| **pH** | **Phytic acid (%)** | **Ribonucleic acid** **(mg/kg)** | **% reduction of ribonucleic acid** |
|---|---|---|---|
| 4.5 (control sample) | 1.4 | 9143 | -- |
| 5.1 (sample 1) | 0.08 | 3180 | 65.3 |
| 4.5 (sample 2) | <0.07 | 1386 | 84.9 |

The results show that an enzyme preparation containing an acid phosphatase and a phytase are effective to substantially reduce both the phytic acid and ribonucleic acid content in a soy protein isolate at pH 4.5 and at pH 5.1. The reduction of the ribonucleic acid content in the protein isolate is particularly effective at pH 4.5.

### EXAMPLE 5 (comparative)

The effect of the time of enzymatic treatment on the enzymatic degradation of ribonucleic acids and phytic acid in soy protein isolate by an enzyme preparation containing an acid phosphatase and a phytase enzyme is examined, where the soy protein isolate is purified in accordance with the present invention. A slurry is formed of soy protein isolate by mixing sufficient soy protein isolate with water adjusted to pH 4.6 by hydrochloric acid to form a slurry containing about 8% of the soy protein isolate by weight. The slurry is heated to a temperature of 50°C.

Two samples of the slurry are prepared for enzymatic degradation of the ribonucleic acids and phytic acid. The first slurry sample weighs 1455.45 kg (3202 pounds) and contains 7.6% total solids by weight. The second sample weighs 695.45 kg (1530 pounds) and contains 8.6% total solids by weight. An enzyme preparation containing an acid phosphatase and a phytase and having an activity of 1400 KPU/kg of curd solids is added to the first sample and second samples. The first sample is treated with the enzyme preparation for 1 hour, and the second sample is treated with the enzyme preparation for 2 hours. Following the enzyme treatment of the samples, the samples are thoroughly washed and the enzymes are thermally deactivated by jet cooking the samples at a temperature of 150°C. The samples are flash cooled to 50°C by ejection into a vacuumised chamber. The cooled samples are then spray dried.

A control sample having a total solids content of 7.6% is provided from the initial protein slurry for comparison purposes. The control sample is heated to 50°C for 1 hour, and then is thoroughly washed. The washed control sample is jet cooked at 150°C and then is flash cooled in a vacuumised chamber to 52°C. The control sample is then spray dried.

The samples are analysed to determine the ribonucleic acid content and the phytic acid content of the samples. The results of the analysis are shown in Table 3 below.

**TABLE 3**

| **Enzyme treatment time** | **Phytic acid (%)** | **Ribonucleic acid** **(mg/kg)** | **% reduction of ribonucleic acid** |
|---|---|---|---|
| t=0 (control) | 1.41 | 9143 | -- |
| t=1 hour | 0.18 | 1769 | 80.7 |
| t=2 hours | <0.06 | 1759 | 80.7 |

Treatment of soy protein isolate with an enzyme preparation containing an acid phosphatase and a phytase for a period of 1 hour or 2 hours is effective to substantially reduce the ribonucleic acid content and the phytic acid content in the protein isolate. Treatment for 2 hours increases the reduction of phytic acid content in the protein isolate relative to a 1 hour treatment, but does not significantly increase the reduction of ribonucleic acid content in the protein.

### EXAMPLE 6 (comparative)

The effect of temperature on the enzymatic degradation of ribonucleic acids and phytic acid in soy protein isolate by an enzyme preparation containing an acid phosphatase and a phytase enzyme is examined, where the soy protein isolate is purified in accordance with the present invention. A slurry is formed of soy protein isolate by mixing sufficient soy protein isolate with water adjusted to pH 4.5 by hydrochloric acid to form a slurry containing about 8% of the soy protein isolate by weight.

A first sample of the slurry containing 8% total solids by weight is prepared from the protein isolate slurry for enzymatic degradation of the ribonucleic acids and phytic acid. The first sample is adjusted to a temperature of 50°C. A second sample of the slurry containing 4% total solids by weight is prepared from the protein isolate slurry. The second sample is adjusted to a temperature of 38°C. These samples are then treated for two hours with an enzyme preparation containing an acid phosphatase enzyme and a phytase enzyme and having an activity of 1400 KPU/kg of curd solids. Following the enzyme treatment of the samples, the samples are thoroughly washed and the enzymes are thermally deactivated by jet cooking at a temperature of 150°C. The samples are flash cooled to 53°C by ejection into a vacuumised chamber. The cooled samples are then spray dried.

A control sample having a total solids content of 7.6% is provided from the initial protein slurry for comparison purposes. The control sample is heated to 50°C for 1 hour, and then is thoroughly washed. The washed control sample is jet cooked at 150°C and then is flash cooled in a vacuumised chamber to 52°C. The control sample is then spray dried.

The samples are analysed to determine the ribonucleic acid content and the phytic acid content of the samples. The results of the analysis are shown in Table 4 below.

**TABLE 4**

| **Temperature** | **Phytic acid (%)** | **Ribonucleic acid** **(mg/kg)** | **% ribonucleic acid reduction** |
|---|---|---|---|
| Control | 1.41 | 9143 | -- |
| 50°C | <0.07 | 1386 | 84.9 |
| 38°C | 0.4 | 3848 | 58.0 |

Treatment of soy protein isolate with an enzyme preparation containing an acid phosphatase and a phytase at temperatures of 38°C and 50°C is effective to significantly reduce the ribonucleic acid content and the phytic acid content in the protein isolate. Treatment at 50°C increases the reduction of phytic acid content and ribonucleic acid content in the protein isolate relative to treatment at 38°C.

### EXAMPLE 7 (comparative)

The effect of enzymatic degradation of phytic acid and ribonucleic acids in soy protein isolate by an enzyme preparation containing an acid phosphatase and a phytase on the mineral content in the protein is examined. In particular, the effect of the enzymatic degradation on the calcium, iron, magnesium, sodium, zinc, copper, potassium, manganese, and phosphorus concentrations in soy protein isolate is examined.

A slurry is formed of soy protein isolate by mixing sufficient soy protein isolate with water adjusted to pH 4.6 by hydrochloric acid to form a slurry containing about 8% of the soy protein isolate by weight. A sample is prepared for enzymatic degradation of phytic acid and ribonucleic acids from the slurry, where the sample weighs 1455.45 kg (3202 pounds) and has a total solids concentration of 7.6% by weight. The sample is heated to a temperature of 50°C. An enzyme preparation containing an acid phosphatase and a phytase and having an activity of 1400 KPU/(kg of curd solids) is added to the sample, and the sample is treated with the enzyme preparation for 1 hour. Following the enzyme treatment of the sample, the sample is thoroughly washed and the enzymes are thermally deactivated by jet cooking the sample at a temperature of 150°C. The sample is flash cooled to 53°C by ejection into a vacuumised chamber. The cooled sample is then spray dried.

A control sample having a total solids content of 7.6% is provided from the initial protein slurry for comparison purposes. The control sample is heated to 50°C for 1 hour, and then is thoroughly washed. The control sample is then jet cooked at 150°C and then is flash cooled in a vacuumised chamber to 52°C. The control sample is then spray dried. The samples are analysed to determine the calcium, iron, magnesium, sodium, zinc, copper, potassium, manganese, and phosphorus content of the samples. The results of the analysis are shown in Table 5 below.

**TABLE 5**

| ppm | | | | | | | | | |
|---|---|---|---|---|---|---|---|---|---|
| **Sample** | **Ca** | **Fe** | **Mg** | **Na** | **Zn** | **Cu** | **K** | **Mn** | **P** |
| Control | 1820 | 149 | 587 | 9070 | 33 | 12.4 | 8225 | 9.9 | 7991 |
| Sample | 1617 | 113 | 508 | 5988 | 26.8 | 11.7 | 5714 | 6.4 | 2583 |

Treatment of soy protein isolate with an enzyme preparation containing an acid phosphatase and a phytase is effective to reduce the calcium, iron, magnesium, sodium, zinc, copper, potassium, manganese, and phosphorus contents in the protein isolate. The enzymatic treatment is particularly effective in reducing the sodium, potassium, and phosphorus contents in the protein material.

## Claims

1. A method of producing a purified vegetable protein material having low concentrations of ribonucleic acids, comprising treating an aqueous slurry of a vegetable protein material with an acid phosphatase enzyme and a phytase enzyme at a temperature, a pH, and for a time period effective to degrade ribonucleic acids, phytic acid, and phytates in the vegetable protein material; washing the treated slurry to provide a vegetable protein material having a reduced concentration of ribonucleic acids; and treating said washed and treated vegetable protein slurry with a protease enzyme at a temperature, pH, and for a time sufficient to hydrolyse protein in said slurry.

2. A method according to claim 1, wherein said vegetable protein material is a vegetable protein concentrate or a vegetable protein isolate.

3. A method according to claim 2, wherein said vegetable protein material is a soy protein concentrate or a soy protein isolate.

4. A method according to any one of the preceding claims, wherein said slurry contains from 2% to 30% of the protein material by weight, preferably from 5% to 20% of the protein material by weight.

5. A method according to claim 4, wherein said slurry contains from 10% to 18% of the protein material by weight.

6. A method according to any one of the preceding claims, wherein treatment of said slurry with said enzyme is effective to degrade a majority of ribonucleic acids in said vegetable protein material.

7. A method according to claim 6, wherein washing the treated slurry is effective to remove said degraded ribonucleic acids to provide a vegetable protein material from which a majority of ribonucleic acids have been removed.

8. A method according to any one of claims 1 to 5, wherein treatment of said slurry with said enzyme is effective to degrade at least 60% of ribonucleic acids in said vegetable protein material.

9. A method according to claim 8, wherein washing the treated slurry is effective to remove said degraded ribonucleic acids to provide a vegetable protein material from which at least 60% of ribonucleic acids have been removed.

10. A method according to any one of claims 1 to 5, wherein treatment of said slurry with said enzyme is effective to degrade at least 70% of ribonucleic acids in said vegetable protein material.

11. A method according to claim 10, wherein washing the treated slurry is effective to remove said degraded ribonucleic acids to provide a vegetable protein material from which at least 70% of ribonucleic acids have been removed.

12. A method according to any one of claims 1 to 5, wherein treatment of said slurry with said enzyme is effective to degrade at least 80% of ribonucleic acids in said vegetable protein material.

13. A method according to claim 12, wherein washing the treated slurry is effective to remove said degraded ribonucleic acids to provide a vegetable protein material from which at least 80% of ribonucleic acids have been removed.

14. A method according to any one of claims 1 to 5, wherein treatment of said slurry with said enzyme is effective to degrade all of ribonucleic acids in said vegetable protein material.

15. A method according to claim 14, wherein washing the treated slurry is effective to remove said degraded ribonucleic acids to provide a vegetable protein material from which all of ribonucleic acids have been removed.

16. A method according to any one of the preceding claims, wherein treatment of said slurry with said enzyme is effective to degrade phytic acid and phytates in said vegetable protein material.

17. A method according to claim 16, wherein washing the treated slurry is effective to remove said degraded phytic acid and phytates to provide a vegetable protein material from which phytic acid and phytates have been removed.

18. A method according to any one of the preceding claims, wherein said slurry is treated with said acid phosphatase at a pH of from 3 to 6.

19. A method according to claim 18, wherein said slurry is treated with said acid phosphatase at a pH of from 3.5 to 5.5.

20. A method according to claim 19, wherein said slurry is treated with said acid phosphatase at a pH of from 4 to 5.

21. A method according to claim 20, wherein said slurry is treated with said acid phosphatase at a pH of from 4.4 to 4.6.

22. A method according to any one of the preceding claims, wherein said slurry is treated with said acid phosphatase at a temperature of from 20°C to 70°C.

23. A method according to claim 22, wherein said slurry is treated with said acid phosphatase at a temperature of from 40°C to 55°C.

24. A method according to any one of the preceding claims, wherein said acid phosphatase has an activity of from 600 KPU/g of curd solids to 1400 KPU/g of curd solids.

25. A method according to any one of the preceding claims, wherein said acid phosphatase is present in said slurry in an amount from 0.1% to 10% of the protein material by dry weight.

26. A method according to claim 25, wherein said acid phosphatase is present in said slurry from 0.3% to 5% of the protein material by dry weight.

27. A method according to any one of the preceding claims, wherein said slurry is treated with said acid phosphatase for a period of from 30 minutes to 4 hours.

28. A method according to claim 27, wherein said slurry is treated with said acid phosphatase for a period of from 45 minutes to 3 hours.

29. A method according to any one of the preceding claims further comprising a step of drying said treated and washed slurry to provide a purified vegetable protein material.

30. A method according to any one of the preceding claims further comprising a step of heat treating said treated slurry.

31. A method according to any preceding claim, wherein said protease enzyme is present in said slurry in a concentration of from 0.1% to 10% of the protein in said slurry by dry weight.

32. A method according to any preceding claim, further comprising the step of heat treating the hydrolysed protein slurry.

33. A method according to any preceding claim, further comprising the step of drying the hydrolysed protein material after hydrolysis with said protease enzyme.

34. A method according to any one of the preceding claims, wherein said treatment of said vegetable protein material slurry with an acid phosphatase and said wash of said treated slurry are effective to lower the mineral content in the vegetable protein material.

35. A method according to any preceding claim, wherein washing the treated slurry is effective to remove said degraded phytic acid and phytates to provide a vegetable protein material from which phytic acid and phytates have been removed.

36. A method according to claim 36, wherein treatment of said slurry with said enzymes is effective to degrade at least a majority of phytic acid and phytates in said vegetable protein material.

37. A method according to any preceding claim, wherein washing the treated slurry is effective to remove said degraded phytic acid and phytates to provide a vegetable protein material from which at least a majority of phytic acid and phytates have been removed.

38. A method according to any preceding claim, wherein treatment of said slurry with said enzymes is effective to degrade at least 75% of phytic acid and phytates in said vegetable protein material.

39. A method according to claim 38, wherein washing the treated slurry is effective to remove said degraded phytic acid and phytates to provide a vegetable protein material from which at least 75% of phytic acid and phytates have been removed.

40. A method according to any of claims 1-34, wherein treatment of said slurry with said enzymes is effective to degrade at least 85% of phytic acid and phytates in said vegetable protein material.

41. A method according to claim 40, wherein washing the treated slurry is effective to remove said degraded phytic acid and phytates to provide a vegetable protein material from which at least 85% of phytic acid and phytates have been removed.

42. A method according to any of claims 1-34, wherein treatment of said slurry with said enzymes is effective to degrade all of phytic acid and phytates in said vegetable protein material.

43. A method according to claim 42, wherein washing the treated slurry is effective to remove said degraded phytic acid and phytates to provide a vegetable protein material from which all of phytic acid and phytates have been removed.

44. A method according to any preceding claim, wherein said slurry is treated with said acid phosphatase and said phytase at a pH of from 3 to 6.

45. A method according to claim 44, wherein said slurry is treated with said acid phosphatase and said phytase at a pH of from 3.5 to 5.5.

46. A method according to claim 45, wherein said slurry is treated with said acid phosphatase and said phytase at a pH of from 4 to 5.

47. A method according to claim 46, wherein said slurry is treated with said acid phosphatase and said phytase at a pH of from 4.4 to 4.6.

48. A method according to any preceding claim, wherein said slurry is treated with said acid phosphatase and said phytase at a temperature of from 20°C to 70°C.

49. A method according to claim 48, wherein said slurry is treated with said acid phosphatase and said phytase at a temperature of from 40°C to 55°C.

50. A method according to any preceding claim, wherein said slurry is treated with an enzyme preparation containing said acid phosphatase and said phytase, wherein said enzyme preparation has an activity of 600 KPU/g of curd solids to 1400 KPU/g of curd solids.

51. A method according to any preceding claim, wherein said slurry is treated with an enzyme preparation containing said acid phosphatase and said phytase, wherein said enzyme preparation is present in said slurry from 0.1% to 10% of the protein material by dry weight.

52. A method according to claim 51, wherein said enzyme preparation is present in said slurry in an amount from 0.3% to 5% of the protein material by dry weight.

53. A method according to any preceding claim, wherein said slurry is treated with an enzyme preparation containing said acid phosphatase and said phytase for a period of from 30 minutes to 4 hours.

54. A method according to claim 53, wherein said slurry is treated with said enzyme preparation for a period of from 45 minutes to 3 hours.

## Patentansprüche

1. Verfahren zur Herstellung eines gereinigten Pflanzenproteinmaterials mit niedrigen Konzentrationen von Ribonukleinsäuren, umfassend die Behandlung einer wässrigen Aufschlämmung aus einem Pflanzenproteinmaterial mit einem sauren Phosphatase-Enzym und einem Phytase-Enzym bei einer Temperatur, einem pH und für eine Zeitdauer, die zum Abbau von Ribonukleinsäuren, Phytinsäure und Phytaten im Pflanzenproteinmaterial wirksam ist; Waschen der behandelten Aufschlämmung zur Bereitstellung eines Pflanzenproteinmaterials mit einer reduzierten Konzentration von Ribonukleinsäuren; und Behandlung der gewaschenen und behandelten Pflanzenproteinaufschlämmung mit einem Protease-Enzym bei einer Temperatur, einem pH und für eine Zeitdauer, die zur Hydrolyse des Proteins in der Aufschlämmung ausreichend sind.

2. Verfahren nach Anspruch 1, worin das Pflanzenproteinmaterial ein Pflanzenproteinkonzentrat oder ein Pflanzenproteinisolat darstellt.

3. Verfahren nach Anspruch 2, worin das Pflanzenproteinmaterial ein Sojaproteinkonzentrat oder ein Sojaproteinisolat darstellt.

4. Verfahren nach einem der vorangehenden Ansprüche, worin die Aufschlämmung von 2 Gew-% bis 30 Gew-% des Proteinmaterials, bevorzugt von 5 Gew.-% bis 20 Gew-% des Proteinmaterials enthält.

5. Verfahren nach Anspruch 4, worin die Aufschlämmung von 10 Gew-% bis 18 Gew-% des Proteinmaterials enthält.

6. Verfahren nach einem der vorangehenden Ansprüche, worin die Behandlung der Aufschlämmung mit dem Enzym zum Abbau des größten Teils der Ribonukleinsäuren im Pflanzenproteinmaterial wirksam ist.

7. Verfahren nach Anspruch 6, worin das Waschen der behandelten Aufschlämmung zur Entfernung der abgebauten Ribonukleinsäuren zur Bereitstellung eines Pflanzenproteinmaterials, aus dem der größte Teil der Ribonukleinsäuren entfernt wurde, wirksam ist.

8. Verfahren nach einem der Ansprüche 1 bis 5, worin die Behandlung der Aufschlämmung mit dem Enzym zum Abbau von mindestens 60% der Ribonukleinsäuren im Pflanzenproteinmaterial wirksam ist.

9. Verfahren nach Anspruch 8, worin das Waschen der behandelten Aufschlämmung zur Entfernung der abgebauten Ribonukleinsäuren zur Bereitstellung eines Pflanzenproteinmaterials, aus dem mindestens 60% der Ribonukleinsäuren entfernt wurden, wirksam ist.

10. Verfahren nach einem der Ansprüche 1 bis 5, worin die Behandlung der Aufschlämmung mit dem Enzym zum Abbau von mindestens 70% der Ribonukleinsäuren im Pflanzenproteinmaterial wirksam ist.

11. Verfahren nach Anspruch 10, worin das Waschen der behandelten Aufschlämmung zur Entfernung der abgebauten Ribonukleinsäuren zur Bereitstellung eines Pflanzenproteinmaterials, aus dem mindestens 70% der Ribonukleinsäuren entfernt wurden, wirksam ist.

12. Verfahren nach einem der Ansprüche 1 bis 5, worin die Behandlung der Aufschlämmung mit dem Enzym zum Abbau von mindestens 80% der Ribonukleinsäuren im Pflanzenproteinmaterial wirksam ist.

13. Verfahren nach Anspruch 12, worin das Waschen der behandelten Aufschlämmung zur Entfernung der abgebauten Ribonukleinsäuren zur Bereitstellung eines Pflanzenproteinmaterials, aus dem mindestens 80% der Ribonukleinsäuren entfernt wurden, wirksam ist.

14. Verfahren nach einem der Ansprüche 1 bis 5, worin die Behandlung der Aufschlämmung mit dem Enzym zum Abbau aller Ribonukleinsäuren im Pflanzenproteinmaterial wirksam ist.

15. Verfahren nach Anspruch 14, worin das Waschen der behandelten Aufschlämmung zur Entfernung der abgebauten Ribonukleinsäuren zur Bereitstellung eines Pflanzenproteinmaterials, aus dem alle Ribonukleinsäuren entfernt wurden, wirksam ist.

16. Verfahren nach einem der vorangehenden Ansprüche, worin die Behandlung der Aufschlämmung mit dem Enzym zum Abbau der Phytinsäure und Phytate im Pflanzenproteinmaterial wirksam ist.

17. Verfahren nach Anspruch 16, worin das Waschen der behandelten Aufschlämmung zur Entfernung der abgebauten Phytinsäure und Phytate zur Bereitstellung eines Pflanzenproteinmaterials, aus dem die Phytinsäure und Phytate entfernt wurden, wirksam ist.

18. Verfahren nach einem der vorangehenden Ansprüche, worin die Aufschlämmung mit der sauren Phosphatase bei einem pH von 3 bis 6 behandelt wird.

19. Verfahren nach Anspruch 18, worin die Aufschlämmung mit der sauren Phosphatase bei einem pH von 3,5 bis 5,5 behandelt wird.

20. Verfahren nach Anspruch 19, worin die Aufschlämmung mit der sauren Phosphatase bei einem pH von 4 bis 5 behandelt wird.

21. Verfahren nach Anspruch 20, worin die Aufschlämmung mit der sauren Phosphatase bei einem pH von 4,4 bis 4,6 behandelt wird.

22. Verfahren nach einem der vorangehenden Ansprüche, worin die Aufschlämmung mit der sauren Phosphatase bei einer Temperatur von 20°C bis 70°C behandelt wird.

23. Verfahren nach Anspruch 22, worin die Aufschlämmung mit der sauren Phosphatase bei einer Temperatur von 40°C bis 55°C behandelt wird.

24. Verfahren nach einem der vorangehenden Ansprüche, worin die saure Phosphatase eine Aktivität von 600 KPU/g der Käsebruch-Feststoffe bis 1400 KPU/g der Käsebruch-Feststoffe aufweist.

25. Verfahren nach einem der vorangehenden Ansprüche, worin die saure Phosphatase in der Aufschlämmung in einer Menge von 0,1% bis 10% des Proteinmaterials bezogen auf das Trockengewicht vorliegt.

26. Verfahren nach Anspruch 25, worin die saure Phosphatase in der Aufschlämmung von 0,3% bis 5% des Proteinmaterials bezogen auf das Trockengewicht vorliegt.

27. Verfahren nach einem der vorangehenden Ansprüche, worin die Aufschlämmung mit der sauren Phosphatase für eine Zeitdauer von 30 Minuten bis 4 Stunden behandelt wird.

28. Verfahren nach Anspruch 27, worin die Aufschlämmung mit der sauren Phosphatase für eine Zeitdauer von 45 Minuten bis 3 Stunden behandelt wird.

29. Verfahren nach einem der vorangehenden Ansprüche, weiter umfassend einen Schritt zum Trocknen der behandelten und gewaschenen Aufschlämmung zur Bereitstellung eines gereinigten Pflanzenproteinmaterials.

30. Verfahren nach einem der vorangehenden Ansprüche, weiter umfassend einen Schritt zur Wärmebehandlung der behandelten Aufschlämmung.

31. Verfahren nach einem der vorangehenden Ansprüche, worin das Protease-Enzym in der Aufseblämmung in einer Konzentration von 0,1% bis 10% des Proteins in der Aufschlämmung bezogen auf das Trockengewicht vorliegt.

32. Verfahren nach einem der vorangehenden Ansprüche, weiter umfassend den Schritt zur Wärmebehandlung der hydrolysierten Proteinaufschlämmung.

33. Verfahren nach einem der vorangehenden Ansprüche, weiter umfassend den Schritt des Trocknens des hydrolysierten Proteinmaterials nach der Hydrolyse mit dem Protease-Enzym.

34. Verfahren nach einem der vorangehenden Ansprüche, worin die Behandlung der Aufschlämmung aus Pflanzenproteinmaterial mit einer sauren Phosphatase und das Waschen der behandelten Aufschlämmung zur Senkung des Mineralgehaltes im Pflanzenproteinmaterial wirksam sind.

35. Verfahren nach einem der vorangehenden Ansprüche, worin das Waschen der behandelten Aufschlämmung zur Entfernung der abgebauten Phytinsäure und Phytate zur Bereitstellung eines Pflanzenproteinmatenals, aus dem die Phytinsäure und Phytate entfernt wurden, wirksam ist.

36. Verfahren nach Anspruch 35, worin die Behandlung der Aufschlämmung mit den Enzymen zum Abbau von mindestens dem größten Teil der Phytinsäure und Phytate im Pflanzenproteinmaterial wirksam ist.

37. Verfahren nach einem der vorangehenden Ansprüche, worin das Waschen der behandelten Aufschlämmung zur Entfernung der abgebauten Phytinsäure und Phytate zur Bereitstellung eines Pflanzenproteinmaterials, aus dem mindestens der größte Teil der Phytinsäure und Phytate entfernt wurde, wirksam ist.

38. Verfahren nach einem der vorangehenden Ansprüche, worin die Behandlung der Aufschlämmung mit den Enzymen zum Abbau von mindestens 75% der Phytinsäure und Phytate im Pflanzenproteinmaterial wirksam ist.

39. Verfahren nach Anspruch 38, worin das Waschen der behandelten Aufschlämmung zur Entfernung der abgebauten Phytinsäure und Phytate zur Bereitstellung eines Pflanzenproteinmaterials, aus dem mindestens 75% der Phytinsäure und Phytate entfernt wurden, wirksam ist.

40. Verfahren nach einem der Ansprüche 1 - 34, worin die Behandlung der Aufschlämmung mit den Enzymen zum Abbau von mindestens 85% der Phytinsäure und Phytate im Pflanzenproteinmaterial wirksam ist.

41. Verfahren nach Anspruch 40, worin das Waschen der behandelten Aufschlämmung zur Entfernung der abgebauten Phytinsäure und Phytate zur Bereitstellung eines Pflanzenproteinmaterials, aus dem mindestens 85% der Phytinsäure und Phytate entfernt wurden, wirksam ist.

42. Verfahren nach einem der Ansprüche 1- 34, worin die Behandlung der Aufschlämmung mit den Enzymen zum Abbau der gesamten Phytinsäure und Phytate im Pflanzenproteinmaterial wirksam ist.

43. Verfahren nach Anspruch 42, worin das Waschen der behandelten Aufschlämmung zur Entfernung der abgebauten Phytinsäure und Phytate zur Bereitstellung eines Pflanzenproteinmaterials, aus dem die gesamte(n) Phytinsäure und Phytate entfernt wurden, wirksam ist.

44. Verfahren nach einem der vorangehenden Ansprüche, worin die Aufschlämmung mit der sauren Phosphatase und der Phytase bei einem pH von 3 bis 6 behandelt wird.

45. Verfahren nach Anspruch 44, worin die Aufschlämmung mit saurer Phosphatase und der Phytase bei einem pH von 3,5 bis 5,5 behandelt wird.

46. Verfahren nach Anspruch 45, worin die Aufschlämmung mit der sauren Phosphatase und der Phytase bei einem pH von 4 bis 5 behandelt wird.

47. Verfahren nach Anspruch 46, worin die Aufschlämmung mit der sauren Phosphatase und der Phytase bei einem pH von 4,4 bis 4,6 behandelt wird.

48. Verfahren nach einem der vorangehenden Ansprüche, worin die Aufschlämmung mit der sauren Phosphatase und der Phytase bei einer Temperatur von 20°C bis 70°C behandelt wird.

49. Verfahren nach Anspruch 48, worin die Aufschlämmung mit der sauren Phosphatase und der Phytase bei einer Temperatur von 40°C bis 55°C behandelt wird.

50. Verfahren nach einem der vorangehenden Ansprüche, worin die Aufschlämmung mit einer Enzymaufbereitung, enthaltend die saure Phosphatase und die Phytase, worin die Enzymaufbereitung eine Aktivität von 600 KPU/g der Käsebruchfeststoffe bis 1400 KPU/g der Käsebruchfeststoffe aufweist, behandelt wird.

51. Verfahren nach einem der vorangehenden Ansprüche, worin die Aufschlämmung mit einer Enzymaufbereitung, enthaltend die saure Phosphatase und die Phytase, worin die Enzymaufbereitung in der Aufschlämmung von 0,1% bis 10% des Proteimaterials bezogen auf das Trockengewicht vorliegt, behandelt wird.

52. Verfahren nach Anspruch 51, worin die Enzymaufbereitung in der Aufschlämmung in einer Menge von 0,3% bis 5% des Proteinmaterials bezogen auf das Trockengewicht vorliegt.

53. Verfahren nach einem der vorangehenden Ansprüche, worin die Aufschlämmung mit einer Enzymaufbereitung, enthaltend die saure Phosphatase und die Phytase, für eine Zeitdauer von 30 Minuten bis 4 Stunden behandelt wird.

54. Verfahren nach Anspruch 53, worin die Aufschlämmung mit der Enzymaufbereitung für eine Zeitdauer von 45 Minuten bis 3 Stunden behandelt wird.

## Revendications

1. Procédé de production d'un matériau protéique végétal purifié ayant de faibles concentrations en acides ribonucléiques, comprenant le traitement d'une suspension aqueuse d'un matériau protéique végétal avec une enzyme phosphatase acide et une enzyme phytase à une température, un pH et une durée efficace pour dégrader les acides ribonucléiques, l'acide phytique, et les phytates dans le matériau protéique végétal; le lavage de la suspension traitée pour proposer un matériau protéique végétal ayant une concentration réduite en acides ribonucléiques; et le traitement de ladite suspension protéique végétale lavée et traitée avec une enzyme protéase à une température, un pH, et une durée suffisante pour hydrolyser la protéine dans ladite suspension.

2. Procédé selon la revendication 1, dans lequel ledit matériau protéique végétal est un concentrat protéique végétal ou un isolat protéique végétal.

3. Procédé selon la revendication 2, dans lequel ledit matériau protéique végétal est un concentrat protéique de soja ou un isolat protéique de soja.

4. Procédé selon l'une quelconque des revendications précédentes, dans lequel ladite suspension contient de 2% à 30% du matériau protéique en poids, de préférence de 5% à 20% du matériau protéique en poids.

5. Procédé selon la revendication 4, dans lequel ladite suspension contient de 10% à 18% du matériau protéique en poids.

6. Procédé selon l'une quelconque des revendications précédentes, dans lequel le traitement de ladite suspension avec ladite enzyme est efficace pour dégrader une majorité des acides ribonucléiques dans ledit matériau protéique végétal.

7. Procédé selon la revendication 6, dans lequel le lavage de la suspension traitée est efficace pour retirer lesdits acides ribonucléiques dégradés pour proposer un matériau protéique végétal duquel une majorité des acides ribonucléiques a été retirée.

8. Procédé selon l'une quelconque des revendications 1 à 5, dans lequel le traitement de ladite suspension avec ladite enzyme est efficace pour dégrader au moins 60% des acides ribonucléiques dans ledit matériau protéique végétal.

9. Procédé selon la revendication 8, dans lequel le lavage de la suspension traitée est efficace pour retirer lesdits acides ribonucléiques dégradés pour proposer un matériau protéique végétal dont au moins 60% des acides ribonucléiques ont été retirés.

10. Procédé selon l'une quelconque des revendications 1 à 5, dans lequel le traitement de ladite suspension avec ladite enzyme est efficace pour dégrader au moins 70% des acides ribonucléiques dans ledit matériau protéique végétal.

11. Procédé selon la revendication 10, dans lequel le lavage de la suspension traitée est efficace pour retirer lesdits acides ribonucléiques dégradés pour proposer un matériau protéique végétal dont au moins 70% des acides ribonucléiques ont été retirés.

12. Procédé selon l'une quelconque des revendications 1 à 5, dans lequel le traitement de ladite suspension avec ladite enzyme est efficace pour dégrader au moins 80% des acides ribonucléiques dans ledit matériau protéique végétal.

13. Procédé selon la revendication 12, dans lequel le lavage de la suspension traitée est efficace pour retirer lesdits acides ribonucléiques dégradés pour proposer un matériau protéique végétal dont au moins 80% des acides ribonucléiques ont été retirés.

14. Procédé selon l'une quelconque des revendications 1 à 5, dans lequel le traitement de ladite suspension avec ladite enzyme est efficace pour dégrader tous les acides ribonucléiques dans ledit matériau protéique végétal.

15. Procédé selon la revendication 14, dans lequel le traitement de la suspension traitée est efficace pour retirer lesdits acides ribonucléiques dégradés pour proposer un matériau protéique végétal dont tous les acides ribonucléiques ont été retirés.

16. Procédé selon l'une quelconque des revendications précédentes, dans lequel le traitement de ladite suspension avec ladite enzyme est efficace pour dégrader l'acide phytique et les phytates dans ledit matériau protéique végétal.

17. Procédé selon la revendication 16, dans lequel le lavage de la suspension traitée est efficace pour retirer ledit acide phytique et lesdits phytates dégradés pour proposer un matériau protéique végétal dont l'acide phytique et les phytates ont été retirés.

18. Procédé selon l'une quelconque des revendications précédentes, dans lequel ladite suspension est traitée avec ladite phosphatase acide à un pH de 3 à 6.

19. Procédé selon la revendication 18, dans lequel ladite suspension est traitée avec ladite phosphatase acide à un pH de 3,5 à 5,5.

20. Procédé selon la revendication 19, dans lequel ladite suspension est traitée avec ladite phosphatase acide à un pH de 4 à 5.

21. Procédé selon la revendication 20, dans lequel ladite suspension est traitée avec ladite phosphatase acide à un pH de 4,4 à 4,6.

22. Procédé selon l'une quelconque des revendications précédentes, dans lequel ladite suspension est traitée avec ladite phosphatase acide à une température de 20°C à 70°C.

23. Procédé selon la revendication 22, dans lequel ladite suspension est traitée avec ladite phosphatase acide à une température de 40°C à 55°C.

24. Procédé selon l'une quelconque des revendications précédentes, dans lequel ladite phosphatase acide a une activité de 600 kUP/g de matières solides caillées à 1 400 kUP/g de matières solides caillées.

25. Procédé selon l'une quelconque des revendications précédentes, dans lequel ladite phosphatase acide est présente dans ladite suspension en une quantité de 0,1% à 10% du matériau protéique en poids sec.

26. Procédé selon la revendication 25, dans lequel ladite phosphatase acide est présente dans ladite suspension en une quantité de 0,3% à 5% du matériau protéique en poids sec.

27. Procédé selon l'une quelconque des revendications précédentes, dans lequel ladite suspension est traitée avec ladite phosphatase acide sur une durée de 30 minutes à 4 heures.

28. Procédé selon la revendication 27, dans lequel ladite suspension est traitée avec ladite phosphatase acide sur une durée de 45 minutes à 3 heures.

29. Procédé selon l'une quelconque des revendications précédentes comprenant en outre une étape de séchage de ladite suspension traitée et lavée pour proposer un matériau protéique végétal purifié.

30. Procédé selon l'une quelconque des revendications précédentes comprenant en outre une étape de traitement thermique de ladite suspension traitée.

31. Procédé selon l'une quelconque des revendications précédentes, dans lequel ladite enzyme protéase est présente dans ladite suspension en une concentration de 0,1% à 10% de la protéine dans ladite suspension en poids sec.

32. Procédé selon l'une quelconque des revendications précédentes, comprenant en outre l'étape de traitement thermique de la suspension protéique hydrolysée.

33. Procédé selon l'une quelconque des revendications précédentes, comprenant en outre l'étape de séchage du matériau protéique hydrolysé après hydrolyse avec ladite enzyme protéase.

34. Procédé selon l'une quelconque des revendications précédentes, dans lequel ledit traitement de ladite suspension de matériau protéique végétal avec une phosphatase acide et ledit lavage de ladite suspension traitée sont efficaces pour réduire la teneur en minéraux dans le matériau protéique végétal.

35. Procédé selon l'une quelconque des revendications précédentes, dans lequel le lavage de la suspension traitée est efficace pour retirer ledit acide phytique et lesdits phytates dégradés pour proposer un matériau protéique végétal dont l'acide phytique et les phytates ont été retirés.

36. Procédé selon la revendication 35, dans lequel le traitement de ladite suspension avec lesdites enzymes est efficace pour dégrader au moins une majorité de l'acide phytique et des phytates dans ledit matériau protéique végétal.

37. Procédé selon l'une quelconque des revendications précédentes, dans lequel le lavage de la suspension traitée est efficace pour retirer ledit acide phytique et lesdits phytates dégradés pour proposer un matériau protéique végétal dont au moins une majorité de l'acide phytique et des phytates a été retirée.

38. Procédé selon l'une quelconque des revendications précédentes, dans lequel le traitement de ladite suspension avec lesdites enzymes est efficace pour dégrader au moins 75% de l'acide phytique et des phytates dans ledit matériau protéique végétal.

39. Procédé selon la revendication 38, dans lequel le lavage de la suspension traitée est efficace pour retirer ledit acide phytique et lesdits phytates dégradés pour proposer un matériau protéique végétal dont au moins 75% de l'acide phytique et des phytates ont été retirés.

40. Procédé selon l'une quelconque des revendications 1 à 34, dans lequel le traitement de ladite suspension avec lesdites enzymes est efficace pour dégrader au moins 85% de l'acide phytique et des phytates dans ledit matériau protéique végétal.

41. Procédé selon la revendication 40, dans lequel le lavage de la suspension traitée est efficace pour retirer ledit acide et lesdits phytates dégradés pour proposer un matériau protéique végétal dont au moins 85% de l'acide phytique et des phytates ont été retirés.

42. Procédé selon l'une quelconque des revendications 1 à 34, dans lequel le traitement de ladite suspension avec lesdites enzymes est efficace pour dégrader tous l'acide phytique et les phytates dans ledit matériau protéique végétal.

43. Procédé selon la revendication 42, dans lequel le lavage de la suspension traitée est efficace pour retirer ledit acide phytique et lesdits phytates dégradés pour proposer un matériau protéique végétal dont tous l'acide phytique et les phytates ont été retirés.

44. Procédé selon l'une quelconque des revendications précédentes, dans lequel ladite suspension est traitée avec ladite phosphatase acide et ladite phytase à un pH de 3 à 6.

45. Procédé selon la revendication 44, dans lequel ladite suspension est traitée avec ladite phosphatase acide et ladite phytase à un pH de 3,5 à 5,5.

46. Procédé selon la revendication 45, dans lequel ladite suspension est traitée avec ladite phosphatase acide et ladite phytase à un pH de 4 à 5.

47. Procédé selon la revendication 46, dans lequel ladite suspension est traitée avec ladite phosphatase acide et ladite phytase à un pH de 4,4 à 4,6.

48. Procédé selon l'une quelconque des revendications précédentes, dans lequel ladite suspension est traitée avec ladite phosphatase acide et ladite phytase à une température de 20°C à 70°C.

49. Procédé selon la revendication 48, dans lequel ladite suspension est traitée avec ladite phosphatase acide et ladite phytase à une température de 40°C à 55°C.

50. Procédé selon l'une quelconque des revendications précédentes, dans lequel ladite suspension est traitée avec une préparation d'enzyme contenant ladite phosphatase acide et ladite phytase, dans lequel ladite préparation d'enzyme a une activité de 600 kUP/g de matières solides caillées à 1 400 kUP/g de matières solides caillées.

51. Procédé selon l'une quelconque des revendications précédentes, dans lequel ladite suspension est traitée avec une préparation d'enzyme contenant ladite phosphatase acide et ladite phytase, dans lequel ladite préparation d'enzyme est présente dans ladite suspension de 0,1% à 10% du matériau protéique en poids sec.

52. Procédé selon la revendication 51, dans lequel ladite préparation d'enzyme est présente dans ladite suspension en une quantité de 0,3% à 5% du matériau protéique en poids sec.

53. Procédé selon l'une quelconque des revendications précédentes, dans lequel ladite suspension est traitée avec une préparation d'enzyme contenant ladite phosphatase acide et ladite phytase sur une période de 30 minutes à 4 heures.

54. Procédé selon la revendication 53, dans lequel ladite suspension est traitée avec la ladite préparation d'enzyme sur une période de 45 minutes à 3 heures.
